(19) Europäisches Patentamt
European Patent Office
Office européen des brevets

(11) **EP 0 936 853 B1**

(12) **EUROPÄISCHE PATENTSCHRIFT**

(45) Veröffentlichungstag und Bekanntmachung des Hinweises auf die Patenterteilung:
**09.08.2000 Patentblatt 2000/32**

(51) Int Cl.[7]: **A01C 23/00**

(21) Anmeldenummer: **96946203.5**

(22) Anmeldetag: **13.12.1996**

(86) Internationale Anmeldenummer:
**PCT/DE96/02427**

(87) Internationale Veröffentlichungsnummer:
**WO 97/21337 (19.06.1997 Gazette 1997/26)**

(54) **FAHRZEUG UND VERFAHREN ZUR AUSBRINGUNG VON KLÄRSCHLAMMFRISCHMASSE ODER ANDEREN ORGANISCHEN DÜNGEMITTELN**

VEHICLE AND METHOD FOR DISCHARGING FRESH SEWAGE SLUDGE MATERIAL OR OTHER ORGANIC FERTILIZERS

VEHICULE ET PROCEDE POUR L'EPANDAGE DE MATIERES DE BOUES D'EPURATION FRAICHES OU D'AUTRES ENGRAIS ORGANIQUES

(84) Benannte Vertragsstaaten:
**AT DK ES FR GB IT**

(30) Priorität: **13.12.1995 DE 19546593**

(43) Veröffentlichungstag der Anmeldung:
**25.08.1999 Patentblatt 1999/34**

(73) Patentinhaber: **Hölzl, Hans**
**83137 Schonstett (DE)**

(72) Erfinder: **LÜTTICKEN, Ruth**
**D-83128 Halfing (DE)**

(74) Vertreter: **Kleinschmidt, Michael, Dr.**
**Patentanwalt**
**Vorderer Anger 268**
**86899 Landsberg (DE)**

(56) Entgegenhaltungen:
| | |
|---|---|
| **EP-A- 0 436 455** | **DE-A- 2 819 365** |
| **DE-A- 3 417 372** | **DE-C- 3 719 671** |
| **RU-C- 2 016 408** | **SU-A- 1 531 885** |
| **SU-A- 1 544 230** | |

- **TRANSACTIONS OF THE ASAE, Bd. 11, Nr. 5/6, 1968, WASHINGTON, Seiten 419-421, XP002034117 W.E.FUNK, I.H.LEHMAN: "Slurry fertilizer: Equipment and application costs"**

**Beschreibung**

Die Erfindung betrifft ein Fahrzeug und ein Verfahren zur Ausbringung von Klärschlammfrischmasse oder anderen organischen Düngemitteln auf den Boden, insbesondere auf landwirtschaftliche Nutzflächen gemäß den Merkmalen des Oberbegriffs der Ansprüche 1 (Vorrichtung) und 9 (Verfahren).

Aus dem Stand der Technik sind zahlreiche Vorrichtungen bekannt, mit denen Klärschlammfrischmasse oder andere organische Düngemittel auf den Boden, insbesondere auf landwirtschaftliche Nutzflächen, ausgebracht werden. Wesentlich ist dabei, daß die organischen Düngemittel, insbesondere die Klärschlammfrischmasse, nicht über der - zumeist gesetzlich vorgesehenen - Höchstmenge ausgebracht werden. Das wird dadurch vorgesehen, daß das Fahrzeug mit einer bestimmten Geschwindigkeit fährt und das Fördersystem für die Ausbringung der Klärschlammfrischmasse oder ein anderes organisches Düngemittel geschwindigkeitsabhängig eine vorgesehene Arbeitsbreite versorgt. Wird nun weniger ausgebracht als vorgesehen und gesetzlich zugelassen ist, so ist eine optimale Nährstoffverteilung in einem bestimmten Zeitraum nicht mehr möglich. Ein Fahrzeug und ein entsprechendes Verfahren sind in der DE-A-3 714 642 offenbart.

Wird nun die Klärschlammfrischmasse oder ein anderes organisches Düngemittel vor der Ausbringung daraufhin vorbereitet, daß die vorgesehene Menge pro Flächeneinheit in das entsprechende Ausbringungsfahrzeug eingefüllt wird, so kann damit grundsätzlich eine entsprechend vorgesehene Fläche gedüngt werden.

Dabei hat sich aber ein Problem herausgestellt, das mit den Fahrzeugen und Verfahren gemäß dem Stand der Technik nicht gelöst werden kann. Klärschlammfrischmasse, aber auch anderer organischer Dünger ist - in diesem Falle zwischen dem Zeitpunkt der Vorbereitung und der Ausbringung auf dem Boden - einer natürlichen Veränderung durch eine Erhöhung oder Verminderung des Feuchtigkeitsgehalts durch Austrocknung, Befeuchtung mit Regenwasser etc. unterworfen. Wenn sich nun das Gewicht oder Feuchtigkeitsgehalt der Klärschlammfrischmasse oder eines anderen organischen Düngemittels nach der Vorbereitung, aber vor der Ausbringung auf den Boden ändert, so wird bei der Ausbringung dem Boden zuwenig oder zuviel Dünger zugefügt und die oben beschriebenen Nachteile treten ein, wobei die Gefahr der über das gesetzliche Maß hinausgehenden Düngung in jedem Falle zu vermeiden ist. In der DE-A- 2819365 wird bereits eine Vorrichtung und ein Verfahren gemäß Oberbegriff der Ansprüche 1 bzw. 8 offenbart, mit der eine Gewichts messung möglich ist. Der Erfindung liegt somit die Aufgabe zugrunde, ein Fahrzeug und ein entsprechendes Verfahren zur Verfügung zu stellen, mit dem der vorgesehene Betrag an Klärschlammfrischmasse oder anderem organischen Düngemittel ausgebracht werden kann, auch wenn einer der oben beschriebenen Vorgänge auf die Klärschlammfrischmasse oder ein anderes organisches Düngemittel eingewirkt hat.

Die Aufgabe der Erfindung wird durch ein Fahrzeug entsprechend Anspruch 1 und ein Verfahren entsprechend Anspruch 8 gelöst. Dabei haben die Maßnahmen der Erfindung zunächst einmal zur Folge, daß eine Kompensation für eine Veränderung des Feuchtigkeitsgehalts und des Gewichts dadurch erfolgen kann, daß abhängig vom Feuchtigkeitsgehalt und dem Gesamtgewicht an zum Zeitpunkt der Ausbringung geladener Klärschlammfrischmasse oder einem anderen organischen Düngemittel das Steuerungssystem zur Steuerung der Ausbringungsmenge pro Zeiteinheit bzw. pro zurückgelegtem Weg mehr oder weniger Klärschlammfrischmasse oder organisches Düngemittel fördert und ausbringt. Damit wird ein Fahrzeug zur Verfügung gestellt, mit dem die nachteiligen Effekte einer Düngung über das gesetzliche zulässige Maß hinaus vermieden werden. Es können aber auch die gesetzlichen Höchstwerte für eine optimale Nährstoffverteilung ausgeschöpft werden.

Die logische Verbindung zwischen den Meßelementen für Gesamtgewicht und Feuchtigkeitsgehalt der Klärschlammfrischmasse oder eines anderen organischen Düngemittels und der genannten Steuerung wird dabei durch Mittel zur Berechnung eines Korrekturwertes hergestellt.

Das zur Erfindung gehörende Verfahren ist im unabhängigen Verfahrens anspruch beansprucht. Ebenso wie bei der Definition des Fahrzeugs stellt dabei die Berechnung eines Korrekturwertes das Bindeglied zwischen dem Vorgang der Messung und der Steuerung der Ausbringungsmenge dar.

Weitere vorteilhafte Ausgestaltungen sind in den Unteransprüchen dargelegt. Eine einfache und wenig aufwendige Art, das Gesamtgewicht an Klärschlammfrischmasse oder eines anderen organischen Düngemittels zu bestimmen ist durch Anbringung von Drucksensoren unter dem Behälter zur Aufnahme der Klärschlammfrischmasse oder eines anderen organischen Düngemittels realisiert. Die Messung der Feuchtigkeitssensoren geschieht vorteilhaft durch elektrische Widerstandssensoren, während die Mittel zur Berechnung des Korrekturwertes vorteilhafterweise aus einem im erfindungsgemäßen Fahrzeug installiertem Bordrechner bestehen.

Vorteilhafte Ausgestaltungen des erfindungsgemäßen Verfahrens sind in den vom unabhängigen Verfahrensanspruch abhängigen Unteransprüchen dargelegt. Vorteilhaft ist insbesondere, die gemessenen Werte vom Gewicht und vom Feuchtigkeitsgehalt der Klärschlammfrischmasse oder eines anderen organischen Düngemittels zusammen mit einer vorgegebenen Arbeitsbreite des Fahrzeugs auf die entsprechenden Sollwerte zu beziehen und so den Korrekturwert zu berechnen.

Besonders vorteilhaft gestaltet sich das Verfahren, wenn eine Kalibrationsfahrt durchgeführt wird.

Die vorgenannten sowie die beanspruchten und in dem nachfolgenden Ausführungsbeispiel beschriebenen, erfindungsgemäß zu verwendenden Elemente und Verfahrensschritte unterliegen in ihrer Größe, Formgestaltung, und technischen Konzeptionen keinen besonderen Ausnahmebedingungen, sodaß die in dem jeweiligen Anwendungsgebiet bekannten Auswahlkriterien insbesondere bei dem auf den Boden auszubringenden Stoff uneingeschränkt Anwendung finden können. Das trifft insbesondere auf alle anderen organischen Düngemittel, wie z.B. Kompost zu.

Ein Ausführungsbeispiel des Gegenstandes der Erfindung ergibt sich aus der nachfolgenden Beschreibung der dazugehörigen Zeichnung, in der - beispielhaft - ein erfindungsgemäßes Fahrzeug und ein erfindungsgemäßes Verfahren dargestellt ist.

In der Zeichnung zeigt:

　　Fig. 1 eine Seitenansicht des Fahrzeuges;
　　Fig. 2 eine schematische Darstellung einer Draufsicht auf das Fahrzeug;

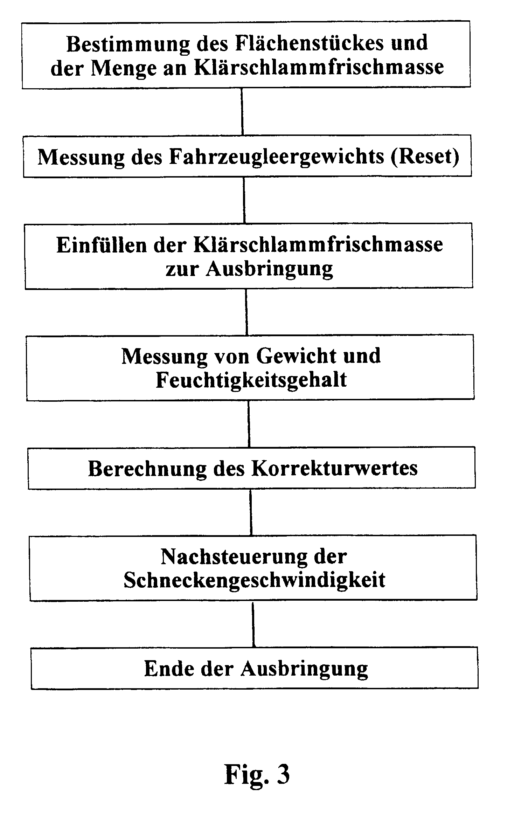

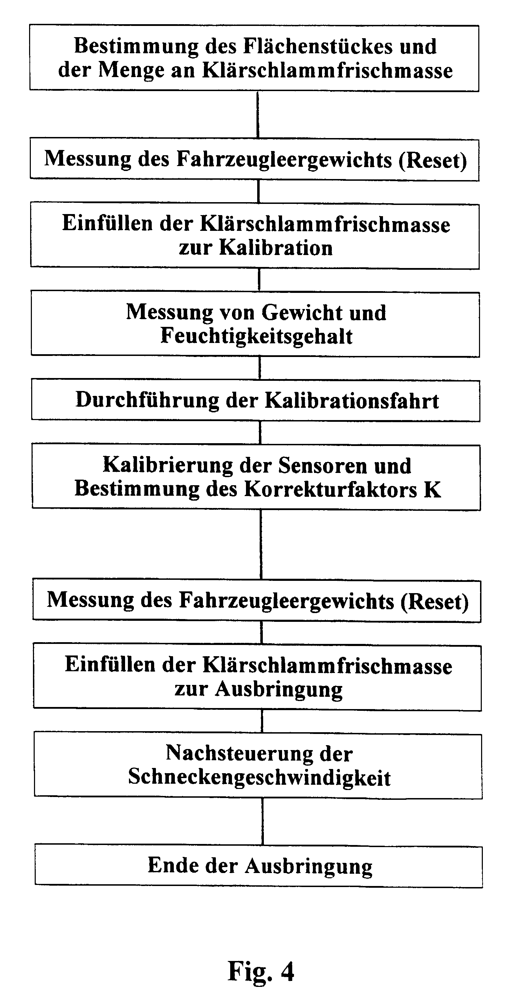

　　Fig. 3 und 4 eine schematische Darstellung (Ablaufdiagramm) des Verfahrens ohne und mit einer Kalibrationsfahrt.

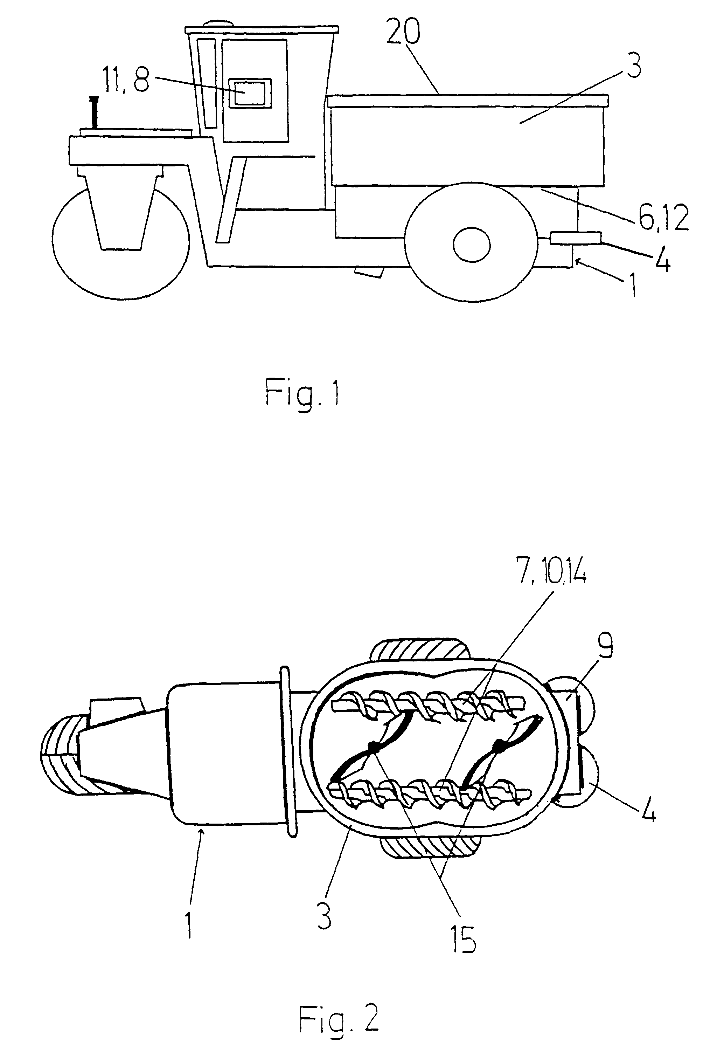

Das in Fig. 1 als ganzes gezeigte Fahrzeug 1 weist im ersten Ausführungsbeispiel einen Tank 3 zur Aufnahme von Klärschlammfrischmasse auf. Die Klärschlammfrischmasse kann über die Einfüllöffnung 20 eingefüllt werden. Das Fahrzeug wird dann auf das zu düngende Feld gebracht und der DÜngungsvorgang wird über die fahrzeuggetriebene Schneckenanordnung 10 eingeleitet. Dazu werden Steuerungsklappen 9 am Fahrzeug geöffnet. Beide Einrichtungen (Steuerungsklappen 9 und Förderschnecken 10) zusammen bestimmen die Menge an Klärschlammfrischmasse, die beim Betrieb des Fahrzeuges mit einer vorgegebenen Geschwindigkeit in einer vorgegebenen Zeiteinheit oder entsprechend einer vorgegebenen Wegstrecke ausgebracht wird, wobei die Schneckendrehzahl in erster Linie die Ausbringungsmenge in der Zeiteinheit bestimmt, während durch die Öffnung der Steuerungsklappen 9 in erster Linie die Arbeitsbreite der Ausbringung festgelegt wird. Beide Steuerungselemente sind aber aufeinander abgestimmt. Die Steuerung der Menge eben in Anhängigkeit der Wegstrecke übernimmt ein Bordrechner 11. Diesem Bordrechner 11 stehen im ersten Ausführungsbeispiel aber auch noch die Meßwerte der Feuchtigkeitssensoren 7 und der Gewichtssensoren 8 zur Verfügung. Der Bordrechner ist so eingerichtet, daß ihm mit Hilfe der Datenfernübertragung die Solldaten bezüglich des Klärschlammtyps, des Feuchtigkeitsgehalts und des Gesamtgewichts der Klärschlammfrischmasse eingegeben werden können. Weiterhin ist er so eingerichtet, daß ein Korrekturwert bezüglich des tatsächlich ermittelten Feuchtigkeitsgehalts und des tatsächlich ermittelten Gesamtgewichts bestimmt werden kann die Stellung die Schnecken 10 so eingestellt bzw. angetrieben werden, daß eine um den Korrekturwert erhöhte oder erniedrigte Menge an Klärschlammfrischmasse in der vorgesehenen Zeiteinheit oder der zurückgelegten Wegstrecke ausgebracht wird. Im Ausführungsbeispiel ist der Bordrechner 11 so eingerichtet, daß die Menge sich je nach der Arbeitsbreite der Ausbringung auf eine Fläche bezieht, wenn das Fahrzeug eine bestimmte Wegstrecke zurücklegt, da die Arbeitsbreite der Ausbringung ebenfalls einstellbar ist.

Im Ausführungsbeispiel handelt es sich bei den Mitteln 6 zur Bestimmung des Gewichts um unter dem Tank 3 angebrachte Drucksensoren, deren Meßsumme gerade dem Gewicht des Tanks 3 entspricht. Unter Berücksichtigung des Wertes einer Gewichtsmessung vor dem Einfüllen der Klärschlammfrischmasse 2 (Resetfunktion) in den Tank 13 ist der Bordrechner 11 leicht imstande, das Gesamtgewicht an Klärschlammfrischmasse 2 zu bestimmen.

Weiterhin umfassen im Ausführungsbeispiel die Feuchtigkeitssensoren 7 elektrische Messwiderstände 14, die im Schneckengang für die Klärschlammfrischmasse 2 eingebracht sind. Die Feuchtigkeitsmeßeinrichtung 7 ist kalibriert, sodaß aus dem gemessenen elektrischen Widerstand der Feuchtigkeitsgehalt bestimmt werden kann. Mit dieser grundsätzlich bekannten Technik können Feuchtigkeitsgehalte von ca. 50%-60% in Bezug auf die Klärschlammfrischmasse 2 mit einer Genauigkeit von ca. 1% problemlos vermessen werden.

Um die Messung von Feuchtigkeitsgehalt und Gewicht für die gesamte Menge an Klärschlammfrischmasse gültig zu haben, sind im Ausführungsbeispiel im Tank 3 Rühreinrichtungen 15 vorgesehen, die die Konsistenz der Klärschlammfrischmasse 2 gleichmäßig halten.

In dem entsprechenden erfindingsgemäßen Verfahren beim Einsatz des Fahrzeugs 1 des ersten Ausführungsbeispiels wird die Menge an Klärschlammfrischmasse 2 vor Beginn des Ausbringungsvorganges mit den Gewichtssensoren 6 gemessen. Bei der Messung im Fahrzeug wird das durch eine Differenzmessung vor und nach dem Einfüllen durchgeführt. Weiterhin wird der Feuchtigkeitsgehalt der Klärschlammfrischmasse mit den entsprechenden Sensoren 7 bestimmt und mit den Solldaten verglichen.

Unter Verwendung der gemessenen Werte wird nun ein Korrekturwert berechnet und zwar so, daß die für das Flächenstück vorberechnete Gesamtmenge auf eben dieses Flächenstück ausgebracht wird, ohne daß etwas übrigbleibt oder ein Teilstück der Fläche nicht mehr gedüngt werden könnte. Im Falle der Feuchtigkeitsmessung ist der Korrekturwert gleich dem Verhältnis von gemessenem Feuchtigkeitsgehalt zum Sollwert des Feuchtigkeitsgehalte, sodaß proportional mehr pro zurückgelegter Wegstrecke ausgebracht werden kann, indem die Schnecken 10 schneller fördern.

In einer bevorzugten Ausführungsform des erfindungsgemäßen Verfahrens wird vor dem eigentlichen Ausbringungsvorgang eine Kalibrationsfahrt durchgeführt, bei der eine ganz bestimmte Menge an Klärschlammfrischmasse 2 eingefüllt wird und dann der Meßvorgang für Gewicht und Feuchtigkeitsgehalt durchgeführt wird. Die Fahrt wird mit einer vorgewählten und abgewogenen Menge an Klärschlammfrischmasse durchgeführt und es wird festgestellt, nach welcher Wegstrecke bei einer eingestellten Arbeitsbreite, die sich neben den Fahrzeugdaten aus der Öffnung der Klappen 9 und der Drehgeschwindigkeit der Förderschnecken 10 ergibt, der Tank 3 leer ist. Ist er schon leer, bevor die sich aus den Solldaten ergebende Sollwegstrecke abgefahren ist, so wurde der Korrekturwert insgesamt nicht exakt bestimmt. Gegenüber dem ersten Ausführungsbeispiel führt das Verfahren dieses zweiten Ausführungsbeispiels zu einem nochmals verbesserten Korrekturwert. Mit diesem Kalibrationsverfahren ist in jedem Falle gesichert, daß Menge und Feuchtigkeitsgehalt an Klärschlammfrischmasse 2 nicht dazu führen, daß insgesamt zuwenig oder zuviel Klärschlammfrischmasse 2 auf das entsprechende Bodenstück ausgebracht wird.

Bei der Gewichtsmessung auf dem Fahrzeug kann auch zu jeder Zeit angehalten und das Restgewicht der noch an Bord befindlichen Düngermenge gemessen werden, sodaß ein Fahren und Düngen bis zur vollständigen Entleerung des Tanks nicht notwendig ist.

Die Ermittlung des Korrekturwertes für den Feuchtigkeitsgehalt geschieht linear, wobei der Korrekturfaktor als Proportionalitätsfaktor dem Verhältnis zwischen den Feuchtigkeitsgehalten zum Zeitpunkt $t_1$ (Abnahme in der Kläranlage) und $t_2$ (Ausbringung) entspricht:

$$KFM_{t2}=(F_{t1}/F_{t2})*KFM_{t1}$$

Für die Kalibrationsfahrt sind die Solldaten Menge $KFMT_{t1}$, in Menge pro Flächeneinheit, Meßstrecke M und Arbeitsbreite AB vorgegeben. Der Korrekturfaktor bezüglich der Ausbringungsmengensteuerung bei der Kalibrationsfahrt ergibt sich im Ausführungsbeispiel als

$$K = 1 - (KFM_{k2}/KFM_{k1})$$

wobei $KFM_{k2}$ das auf die Ausbringungsfläche normierte, gemessene Gewicht der während der Kalibrationsfahrt ausgebrachten Klärschlammfrischmasse ist, während $KFM_{k1}$ das auf die Sollfläche bei der Kalibrationsfahrt normierte Gewicht an Klärschlammfrischmasse ist, die während der Kalibrationsfahrt ausgebracht werden sollte. Um den Faktor K muß bei der späteren Ausbringung die Menge $KFM_{t1}$ korrigiert werden.

Im Verfahren nach einer alternativen Ausführungsform der Erfindung wird die Gewichtsmessungen nach einem vorgegebenen Zeitintervall wiederholt und der Bordrechner 11 kann das Restgewicht an Klärschlammfrischmasse 2 mit dem Sollrestgewicht vergleichen und den Korrekturwert anpassen. Dies stellt sicher, daß Abweichungen, die sich aus Meß- oder Auswertungsgenauigkeiten ergeben, noch rechtzeitig ausgeglichen werden können. Entsprechend wird auch der Feuchtigkeitsgehalt nach dem vorgegebenen Zeitintervall (z.B. alle 5 Sekunden) gemessen und der entsprechende Korrekturwert gegebenenfalls nachgebessert.

**Patentansprüche**

1.   Fahrzeug (1) zum Ausbringen von Klärschlammfrischmasse oder anderen organischen Düngemitteln (2) auf den Boden, insbesondere auf landwirtschaftliche Nutzflächen, mit

-   Mitteln (3) zur Aufnahme der Klärschlammfrischmasse (2) oder eines anderen organischen Düngemittels,
-   Mitteln (4) zum Ausbringen der Klärschlammfrischmasse oder eines anderen organischen Düngemittels aus den Mitteln (3) zur Aufnahme der Klärschlammfrischmasse oder eines anderen organischen Düngemittels auf den Boden,
-   Mitteln (5) zum Steuern der Ausbringungsmenge von Klärschlammfrischmasse oder eines anderen organischen Düngemittels abhängig von der Zeit oder der Geschwindigkeit des Fahrzeugs (1),
-   Mitteln (6) zum Messen des Gewichts der Klärschlammfrischmasse oder eines anderen organischen Düngemittels (2), wobei die Mittel (6) zum Messen des Gewichts der Klärschlammfrischmasse oder eines anderen organischen Düngemittels (2) am Fahrzeug (1) angebracht sind,

**gekennzeichnet** durch

-   Mittel (7) zum Messen, des Feuchtigkeitsgehalts der Klärschlammfrischmasse oder eines anderen organischen Düngemittels (2), von denen die Mittel zum Steuern der Ausbringungsmenge an Klärschlammfrischmasse oder eines anderen organischen Düngemittels (2) ebenfalls abhängig sind, wobei die Mittel (7) zum Messen des Feuchtigkeitsgehalts der Klärschlammfrischmasse oder eines anderen organischen Düngemittels (2) am Fahrzeug angebracht sind, und
-   Mittel (8) zum Ermitteln eines Korrekturwertes der Ausbringungsmenge an Klärschlammfrischmasse oder einem anderen organischen Düngemittel (2), wobei der Korrekturwert von den Meßwerten der Mittel (6) zum Messen des Gewichts und von den Meßwerten (7) zum Messen des Feuchtigkeitsgehaltes abhängt.

2. Fahrzeug nach Anspruch 1, dadurch gekennzeichnet, daß die Mittel (6) zur Messung des Gewichts der Klärschlammfrischmasse oder eines anderen organischen Düngemittels (2) aus einem oder einer Mehrzahl von unter den Mitteln (3) zur Aufnahme der Klärschlammfrischmasse oder eines anderen organischen Düngemittels (2) angebrachten Drucksensoren (12) bestehen.

3. Fahrzeug nach Anspruch 1 oder 2, gekennzeichnet durch Mittel (12) zur Übertragung des Meßwertes des Gewichts der eingefüllten Menge an Klärschlammfrischmasse oder eines anderen organischen Düngemittels (2), wobei die Mittel (12) zur Übertragung des Meßwertes des Gewichts der eingefüllten Menge an Klärschlammfrischmasse oder eines anderen organischen Düngemittels (2) Datenfernübertragungsmittel aufweisen.

4. Fahrzeug nach einem der Ansprüche 1 bis 3, dadurch gekennzeichnet, daß die Mittel (5) zur Steuerung der Ausbringungsmenge von Klärschlammfrischmasse (2) oder eines anderen organischen Düngemittels abhängig von der Zeit oder der Geschwindigkeit des Fahrzeugs (1) verschließbare Steuerungsklappen (9) aufweisen.

5. Fahrzeug nach einem der Ansprüche 1 bis 4, dadurch gekennzeichnet, daß die Mittel (5) zur Steuerung der Ausbringungsmenge von Klärschlammfrischmasse oder eines anderen organischen Düngemittels (2) abhängig von der Zeit oder der Geschwindigkeit des Fahrzeugs (1) die Klärschlammfrischmasse oder ein anderes organisches Düngemittel (2) austreibende, angetriebene Förderschnecken (10) aufweisen.

6. Fahrzeug nach einem der Ansprüche 1 bis 5, dadurch gekennzeichnet, daß die Mittel (7) zur Messung des Feuchtigkeitsgehalts der Klärschlammfrischmasse oder eines anderen organischen Düngemittels (2) elektrische Widerstände (14) aufweisen.

7. Fahrzeug nach einem der Ansprüche 1 bis 6, dadurch gekennzeichnet, daß die Mittel (8) zur Berechnung des Korrekturwertes einen programmierbaren Rechner (11) umfassen.

8. Verfahren zum Ausbringen von Klärschlammfrischmasse oder anderen organischen Düngemitteln (2) auf den Boden, insbesondere auf landwirtschaftliche Nutzflächen, mit Hilfe eines Mittel (3) zur Aufnahme der Klärschlammfrischmasse oder eines anderen organischen Düngemittels (2), Mitteln (4) zur Ausbringung der Klärschlammfrischmasse oder eines anderen organischen Düngemittels aus dem Mittel (3) zur Aufnahme der Klärschlammfrischmasse auf den Boden und Mitteln (5) zur Steuerung der Ausbringungsmenge von Klärschlammfrischmasse oder ein anderes organisches Düngemittel aufweisenden Fahrzeugs (1), wobei die von den Mitteln (5) zur Steuerung der Ausbringungsmenge von Klärschlammfrischmasse oder einem anderen organischen Düngemittel (2) auf den Boden gesteuerte Klärschlammenge oder die Menge eines anderen Düngemittels abhängig von der Geschwindigkeit des Fahrzeugs (1) ist und ein Mittel (6) zur Messung des Gewichts der Klärschlammfrischmasse oder eines anderen organischen Düngemittels (2) auf dem Fahrzeug (1) angebracht ist,
   wobei das Verfahren zunächst den Schritt des Messen des Gewichts mit dem Mittel (6) umfaßt und **gekennzeichnet** ist durch die weiteren Schritte:

- Messen des Feuchtigkeitsgehalts der Klärschlammfrischmasse oder eines anderen organischen Düngemittels mit auf dem Fahrzeug (1) angebrachten Mitteln (6),
- Ermitteln eines Korrekturwertes der Ausbringungsmenge an Klärschlammfrischmasse oder einem anderen organischen Düngemittel (2),
- Steuern der Ausbringungsmenge von Klärschlammfrischmasse oder einem anderen organischen Düngemittel (2) in Abhängigkeit von dem Korrekturwert, wobei der Korrekturwert abhängig ist vom Gewicht und vom Feuchtigkeitsgehalts ist.

9. Verfahren nach Anspruch 8, dadurch gekennzeichnet, daß die
   Berechnung des Korrekturwertes bezogen ist auf die Arbeitsbreite des Fahrzeugs (1),

- einen Sollwert bezüglich der Gewichtsdifferenz in einem Ausbringungstakt und
- einen Sollwert des Feuchtigkeitsgehalts der Klärschlammfrischmasse oder eines anderen organischen Düngemittels.

10. Verfahren nach Anspruch 8 oder 9, dadurch gekennzeichnet,

- daß der Korrekturwert proportional ist zum Verhältnis von gemessenem Wert der Gewichtsdifferenz zum Sollwert der Gewichtsdifferenz der Klärschlammfrischmasse oder eines anderen organischen Düngemittels (2) in einem Ausbringungstakt,
- daß der Korrekturwert proportional ist zum Verhältnis von gemessenem Wert des Feuchtigkeitsgehalts zum Sollwert des Feuchtigkeitsgehalts der Klärschlammfrischmasse oder eines anderen organischen Düngemittels und

- daß das Steuern der Ausbringungsmenge von Klärschlammfrischmasse oder einem anderen organischen Düngemittel (2) proportional zum Korrekturwert ist.

11. Verfahren nach einem der Ansprüche 8 bis 10, gekennzeichnet durch den weiteren Schritt der Kalibration des Korrekturwertes zur Steuerung der Ausbringungsmenge von Klärschlammfrischmasse oder eines anderen organischen Düngemittels (2) auf den Boden durch

- das Einfüllen einer vorbestimmten Menge an Klärschlammfrischmasse oder einem anderen organischen Düngemittel (2),
- das Durchführen einer Kalibrationsfahrt, die Bestimmung der auf der genannten Kalibrationsfahrt zurückgelegten Wegstrecke bis zum Leerzustand der Mittel (3) zur Aufnahme an Klärschlammfrischmasse oder einem anderen organischen Düngemittel (2) und die Kalibration des Korrekturwertes durch die Bestimmung des Verhältnisses der bei der Kalibrationsfahrt tatsächlich zurückgelegten Wegstrecke bis zum Leerzustand der Mittel (3) zur Aufnahme an Klärschlammfrischmasse oder einem anderen organischen Düngemittel (2) zu einer vorbestimmten Wegstrecke.

**Claims**

1. A vehicle (1) for discharging fresh sewage sludge material or other organic fertilizing agents (2) onto the ground, in particular onto areas used for agricultural purposes, with

- means (3) for holding fresh sewage sludge material (2) or another organic fertilizing agent,

- means (4) for discharging fresh sewage sludge material or another organic fertilizing agent from the means (3) for holding fresh sewage sludge material or another organic fertilizing agent onto the ground,

- means (5) for controlling the amount of discharge of fresh sewage sludge material or another organic fertilizing agent depending on the time or speed of the vehicle (1),

- means (6) for measuring the weight of the fresh sewage sludge material or another organic fertilizing agent (2), wherein the means (6) for measuring the weight of the fresh sewage sludge material or another organic fertilizing agent (2) are mounted on the vehicle (1),

characterized in that

- means (7) for measuring the moisture content of the fresh sewage sludge material or another organic fertilizing agent (2), from which the means for controlling the amount of discharge of fresh sewage sludge material or another organic fertilizing agent (2) are likewise dependent, wherein the means (7) for measuring the moisture content of the fresh sewage sludge material or another organic fertilizing agent (2) are mounted on the vehicle, and

- means (8) for determining a correction value of the amount of discharge of fresh sewage sludge material or another organic fertilizing agent (2), wherein the correction value is dependent upon the measured values of the means (6) for measuring the weight and upon the measured values (7) for measuring moisture content.

2. A vehicle according to claim 1, characterized in that the means (6) for measuring the weight of the fresh sewage sludge material or another organic fertilizing agent (2) is comprised of one or several pressure sensors (12) mounted under the means (3) for holding fresh sewage sludge material or another organic fertilizing agent (2).

3. A vehicle according to claims 1 or 2, characterized by means (12) for transmitting the measured value of the weight of the loaded amount of fresh sewage sludge material or another organic fertilizing agent (2), wherein the means (12) for transmitting the measured value of the weight of the loaded amount of fresh sewage sludge material or another organic fertilizing agent (2) have means for data transmission.

4. A vehicle according to one of the claims 1 to 3, characterized in that the means (5) for controlling the amount of discharge of fresh sewage sludge material (2) or another organic fertilizing agent have control flaps (9) that can be locked, depending on the time or speed of the vehicle (1).

5. A vehicle according to one of the claims 1 to 4, characterized in that the means (5) for controlling the amount of discharge of fresh sewage sludge material or another organic fertilizing agent (2) have driven worm conveyers (10) that, depending on the time or speed of the vehicle (1), discharge the fresh sewage sludge material or another organic fertilizing agent (2).

**6.** A vehicle according to one of the claims 1 to 5, characterized in that the means (7) for measuring the moisture content of the fresh sewage sludge material or another organic fertilizing agent (2) has electrical resistors (14).

**7.** A vehicle according to one of the claims 1 to 6, characterized in that the means (8) for calculating the correction value comprises a programmable computer (11).

**8.** A method for discharging fresh sewage sludge material or other organic fertilizing agents (2) onto the ground, in particular onto areas used for agricultural purposes, with the aid of a vehicle (1) having means (3) for holding the fresh sewage sludge material or another organic fertilizing agent (2), means (4) for discharging onto the ground the fresh sewage sludge material or another organic fertilizing agent from the means (3) for holding the fresh sewage sludge material, and means (5) for controlling the amount of discharge of fresh sewage sludge material or another organic fertilizing agent, wherein the sewage sludge amount or the amount of another organic fertilizing agent controlled by the means (5) for controlling the amount of discharge of fresh sewage sludge material or another organic fertilizing agent (2) onto the ground is dependent upon the speed of the vehicle (1), and a means (6) for measuring the weight of the fresh sewage sludge material or another organic fertilizing agent (2) is mounted on the vehicle (1),
wherein the method initially comprises the step for measuring the weight with the means (6) and is characterized by the additional steps of:

- measuring the moisture content of the fresh sewage sludge material or another organic fertilizing agent with means (6) that are mounted on the vehicle (1),

- determining a correction value of the amount of discharge of fresh sewage sludge material or another organic fertilizing agent (2),

- controlling the amount of discharge of fresh sewage sludge material or another organic fertilizing agent (2), depending on the correction value, wherein the correction value is dependent upon the weight and moisture content.

**9.** A method according to claim 8, characterized in that the calculation of the correction value relates to the working width of the vehicle (1),

- a control value concerning the weight difference within a discharging sequence,

- a control value of the moisture content of the fresh sewage sludge material or another organic fertilizing agent.

**10.** A method according to claims 8 or 9, characterized in

- that the correction value is proportional to the ratio of the measured value of the weight difference to the control value of the weight difference of the fresh sewage sludge material or another organic fertilizing agent (2) within a discharging cycle,

- that the correction value is proportional to the ratio of the measured value of the moisture content to the control value of the moisture content of the fresh sewage sludge material or another organic fertilizing agent, and

- that the control of the amount of discharge of discharge of the fresh sewage sludge material or another organic fertilizing agent (2) is proportional to the correction value.

**11.** A method according to one of the claims 8 to 10, characterized by the additional step of calibrating the correction value for controlling the amount of discharge of the fresh sewage sludge material or another organic fertilizing agent (2) onto the ground by

- loading a preset amount of fresh sewage sludge material or another organic fertilizing agent (2),

- performing a calibration run, determining the distance covered during the aforementioned calibration run until the means (3) for holding the fresh sewage sludge material or another organic fertilizing agent (2) are empty, and calibrating the correction value by determining the ratio of the distance, actually covered during the calibration run until the means (3) for holding the fresh sewage sludge material or another organic fertilizing agent (2) are empty, to a predetermined distance.

**Revendications**

**1.** Véhicule (1) pour l'épandage d'une masse de boues de curage fraîche ou d'autres amendements organiques (2) sur le sol, en particulier des surfaces d'exploitations agricoles, comprenant :

- des moyens (3) dans lesquels est chargée la masse de boues de curage fraîche (2) ou un autre amendement organique,

- des moyens (4) pour épandre sur le sol la masse de boues de curage fraîche ou un autre amendement organique à partir des moyens (3) dans lesquels est chargée la masse de boues de curage fraîche ou un autre amendement organique,

- des moyens (5) pour contrôler la quantité de masse de boues de curage fraîche ou d'autre amendement organique épandue en fonction du temps ou de la vitesse du véhicule (1),

- des moyens (6) pour peser la masse de boues de curage fraîche ou d'un autre amendement organique (2), ces moyens (6) pour peser la masse de boues de curage fraîche ou un autre amendement organique (2) étant installés sur le véhicule (1),

caractérisé par :

- des moyens (7) pour mesurer la teneur en humidité de la masse de boues de curage fraîche ou d'un autre amendement organique (2) et dont dépendent également les moyens pour contrôler la quantité de masse de boues de curage fraîche ou d'un autre amendement organique (2) épandue, ces moyens (7) permettant la mesure de la teneur en humidité de la masse de boues de curage fraîche ou d'un autre amendement organique (2) étant installés sur le véhicule, et

- des moyens (8) calculant une valeur de correction de la quantité de masse de boues de curage fraîche ou d'un autre amendement organique (2) à épandre, la valeur de correction dépendant des valeurs relevées par les moyens (6) de pesage et des valeurs relevées (7) par les moyens de mesure de la teneur en humidité.

2. Véhicule selon la revendication 1, caractérisé en ce que les moyens (6) pour peser la masse de boues de curage fraîche ou un autre amendement organique (2) comprennent un ou plusieurs capteurs de pression (12) placés sous les moyens (3) dans lesquels est chargée la masse de boues de curage fraîche ou un autre amendement organique (2).

3. Véhicule selon la revendication 1 ou 2, caractérisé par des moyens (12) assurant la transmission de la valeur de mesure du poids de la quantité chargée de masse de boues de curage fraîche ou d'autre amendement organique (2), ces moyens (12) de transmission de la valeur de mesure du poids de la quantité chargée de masse de boues de curage fraîche ou d'autre amendement organique (2) comportant des moyens de télétransmission de données.

4. Véhicule selon l'une des revendications 1 à 3, caractérisé en ce que les moyens (5) contrôlant la quantité de masse de boues de curage fraîche (2) ou d'autre amendement organique à épandre comportent des trappes d'épandage (9) obturables en fonction du temps ou de la vitesse du véhicule (1).

5. Véhicule selon l'une des revendications 1 à 4, caractérisé en ce que les moyens (5) contrôlant la quantité de masse de boues de curage fraîche ou d'autre amendement organique (2) à épandre comportent des vis de transport (10) entraînées expulsant la masse de boues de curage fraîche ou un autre amendement organique (2) en fonction du temps ou de la vitesse du véhicule (1).

6. Véhicule selon l'une des revendications 1 à 5, caractérisé en ce que les moyens (7) pour mesurer la teneur en humidité de la masse de boues de curage fraîche ou d'un autre amendement organique (2) présentent des résistances électriques (14)

7. Véhicule selon l'une des revendications 1 à 6, caractérisé en ce que les moyens (8) calculant la valeur de correction comportent un ordinateur programmable (11).

8. Procédé pour l'épandage d'une masse de boues de curage fraîche ou d'un autre amendement organique (2) sur le sol, en particulier des surfaces d'exploitations agricoles, à l'aide d'un véhicule (1) comprenant des moyens (3) dans lesquels est chargée la masse de boues de curage fraîche ou un autre amendement organique (2), des moyens (4) pour épandre sur le sol la masse de boues de curage fraîche ou un autre amendement organique à partir des moyens (3) dans lesquels est chargée la masse de boues de curage fraîche, et des moyens (5) contrôlant la quantité de masse de boues de curage fraîche ou d'autre amendement organique à épandre, la quantité de boue de curage ou la quantité d'autre amendement organique contrôlée par les moyens (5) contrôlant la quantité de masse de boues de curage fraîche ou d'autre amendement organique (2) à épandre étant dépendante de la vitesse du véhicule (1) et un moyen (6) pour peser la masse de boues de curage fraîche ou d'autre amendement organique (2) étant installé sur le véhicule (1),
le procédé comprenant dans un premier stade l'étape de pesage avec le moyen (6) et
étant caractérisée par les étapes suivantes :

- mesure de la teneur en humidité de la masse de boues de curage fraîche ou d'autre amendement organique avec des moyens (6) installés sur le véhicule (1),

- établissement d'une valeur de correction pour la quantité de masse de boues de curage fraîche ou d'autre amendement organique (2) à épandre, contrôle de la quantité de masse de boues de curage fraîche épandue, en fonction de la valeur de correction, la valeur de correction étant dépendante du poids et de la teneur en humidité.

9. Procédé selon la revendication 8, caractérisé en ce que le calcul de la valeur de correction se rapporte à la largeur de travail du véhicule (1),

- une valeur de consigne relative à la différence de poids dans un cycle d'épandage, et

- une valeur de consigne de la teneur en humidité de la masse de boues de curage fraîche ou d'un autre amendement organique.

10. Procédé selon la revendication 8 ou 9, caractérisé en ce que :

- la valeur de correction est proportionnelle au rapport de la valeur relevée pour la différence de poids à la valeur de consigne de la différence de poids de la masse de boues de curage fraîche ou d'un autre amendement organique (2) dans un cycle d'épandage,

- la valeur de correction est proportionnelle au rapport de la valeur relevée pour la teneur en humidité à la valeur de consigne de la teneur en humidité de la masse de boues de curage fraîche ou d'autre amendement organique, et

- le réglage de la quantité de masse de boues de curage fraîche ou d'autre amendement organique à épandre (2) est proportionnel à la valeur de correction.

11. Procédé selon l'une des revendications 8 à 10, caractérisé par l'étape supplémentaire de calibrage de la valeur de correction pour le contrôle de la quantité de masse de boues de curage fraîche ou d'un autre amendement organique (2) à épandre sur le sol, par

- le chargement d'une quantité prédéterminée de masse de boues de curage fraîche ou d'autre amendement organique (2),

- une course de calibrage, la détermination de la distance parcourue lors de ladite course de calibrage jusqu'au vidage des moyens (3) dans lesquels est chargée là masse de boues de curage fraîche ou un autre amendement organique (2), et le calibrage de la valeur de correction par détermination du rapport de la distance effectivement parcourue lors de la course de calibrage jusqu'au vidage des moyens (3) dans lesquels est chargée la masse de boues de curage fraîche ou un autre amendement organique (2) à une distance déterminée au préalable.

Fig. 1

Fig. 2

```
┌─────────────────────────────────────────────┐
│  Bestimmung des Flächenstückes und          │
│  der Menge an Klärschlammfrischmasse         │
└─────────────────────────────────────────────┘
                      │
┌─────────────────────────────────────────────┐
│  Messung des Fahrzeugleergewichts (Reset)    │
└─────────────────────────────────────────────┘
                      │
┌─────────────────────────────────────────────┐
│  Einfüllen der Klärschlammfrischmasse        │
│  zur Ausbringung                             │
└─────────────────────────────────────────────┘
                      │
┌─────────────────────────────────────────────┐
│  Messung von Gewicht und                     │
│  Feuchtigkeitsgehalt                         │
└─────────────────────────────────────────────┘
                      │
┌─────────────────────────────────────────────┐
│  Berechnung des Korrekturwertes              │
└─────────────────────────────────────────────┘
                      │
┌─────────────────────────────────────────────┐
│  Nachsteuerung der                           │
│  Schneckengeschwindigkeit                    │
└─────────────────────────────────────────────┘
                      │
┌─────────────────────────────────────────────┐
│  Ende der Ausbringung                        │
└─────────────────────────────────────────────┘
```

**Fig. 3**

Bestimmung des Flächenstückes und
der Menge an Klärschlammfrischmasse

Messung des Fahrzeugleergewichts (Reset)

Einfüllen der Klärschlammfrischmasse
zur Kalibration

Messung von Gewicht und
Feuchtigkeitsgehalt

Durchführung der Kalibrationsfahrt

Kalibrierung der Sensoren und
Bestimmung des Korrekturfaktors K

Messung des Fahrzeugleergewichts (Reset)

Einfüllen der Klärschlammfrischmasse
zur Ausbringung

Nachsteuerung der
Schneckengeschwindigkeit

Ende der Ausbringung

Fig. 4